# FASCICULE DE BREVET EUROPEEN

(11) **EP 3 956 226 B1**
(45) Date de publication et mention de la délivrance du brevet: **17.01.2024**
(21) Numéro de dépôt: 20719964.7
(22) Date de dépôt: 08.04.2020
(51) Int. Cl.: B64D 33/02, F02C 7/042, F02K 1/66

(54) **PROCÉDÉ D'UTILISATION D'UNE ENTRÉE D'AIR DE NACELLE DE TURBORÉACTEUR COMPRENANT UNE LÈVRE D'ENTRÉE D'AIR COMPRENANT UNE PORTION MOBILE POUR FAVORISER UNE PHASE D'INVERSION DE POUSSÉE**
VERFAHREN ZUR VERWENDUNG EINES LUFTEINTRITTS EINER TURBOREAKTORGONDEL MIT EINER LUFTEINLASSLIPPE MIT EINEM ABSCHNITT, DER BEWEGT WERDEN KANN, UM EINE SCHUBUMKEHRPHASE ZU FÖRDERN
PROCESS FOR USING AN AIR INPUT OF A TURBOREACTOR NACELLE COMPRISING AN AIR INPUT LIP WHICH COMPRISES A PORTION WHICH CAN BE MOVED TO PROMOTE A THRUST INVERSION PHASE

(30) Priorité: 17.04.2019 FR 1904089
(43) Date de publication de la demande: 23.02.2022
(73) Titulaire: SAFRAN AIRCRAFT ENGINES, 75015 Paris (FR)
(72) Inventeur: MINCU, Daniel-Ciprian, 77550 MOISSY-CRAMAYEL (FR); LALLIA, Mathieu, Patrick, Jean-Louis, 77550 MOISSY-CRAMAYEL (FR); SIRVIN, Nicolas, Joseph, 77550 MOISSY-CRAMAYEL (FR); WOROTYNSKA, Jagoda, Alina, 77550 MOISSY-CRAMAYEL (FR); DAUTREPPE, Frédéric, 77550 MOISSY-CRAMAYEL (FR); BINDER, Anthony, 77550 MOISSY-CRAMAYEL (FR); LEBEAULT, Eva, Julie, 77550 MOISSY-CRAMAYEL (FR)
(74) Mandataire: Argyma
(86) Numéro de dépôt international: PCT/EP2020/060029
(87) Numéro de publication internationale: WO 2020/212225

(56) Documents cités:
- EP-A1- 3 421 373
- EP-A2- 1 992 810
- GB-A- 1 565 212
- US-A- 3 222 863
- US-A- 3 652 036
- US-A- 5 014 933
- US-A1- 2014 363 276

## Description

### DOMAINE TECHNIQUE DE L'INVENTION

La présente invention concerne le domaine des turboréacteurs d'aéronef et vise plus particulièrement une entrée d'air d'une nacelle d'un turboréacteur d'aéronef.

De manière connue, un aéronef comporte un ou plusieurs turboréacteurs pour permettre sa propulsion par accélération d'un flux d'air qui circule d'amont en aval dans le turboréacteur.

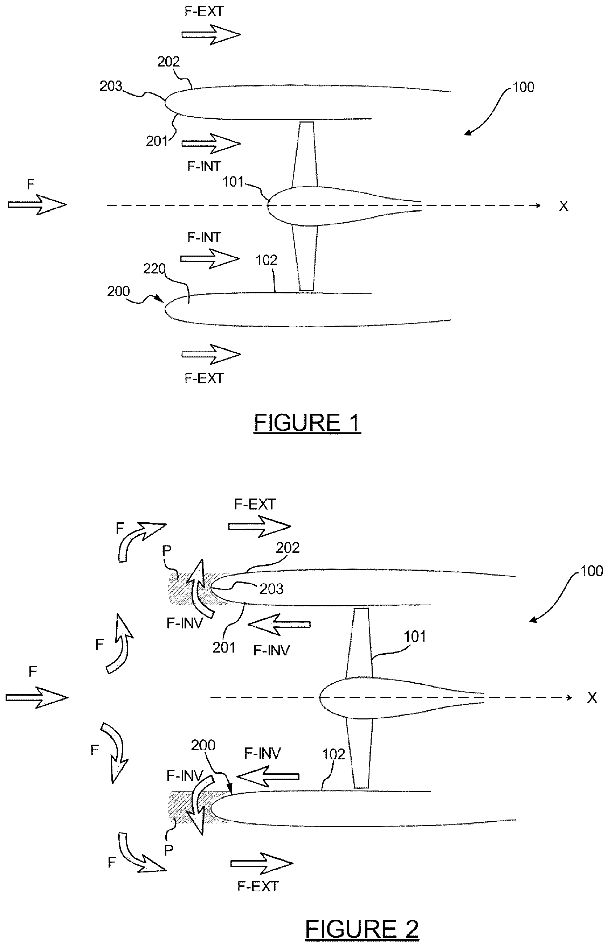

En référence à la figure 1, il est représenté un turboréacteur 100 s'étendant selon un axe X et comportant une soufflante 101 montée rotative autour de l'axe X dans une virole extérieure 102 afin d'accélérer, lors de la poussée du turboréacteur 100, un flux d'air circulant d'amont vers l'aval dans le turboréacteur 100, dit flux d'air intérieur F-INT. Par la suite, les termes « amont » et « aval » sont définis par rapport à la circulation du flux d'air intérieur F-INT.

De manière connue, le turboréacteur 100 comprend une nacelle comportant à son extrémité amont une entrée d'air 200 comportant une paroi intérieure 201 tournée vers l'axe X et une paroi extérieure 202 opposée à la paroi intérieure 201. Les parois 201, 202 sont reliées par une lèvre de l'entrée d'air 203, qui comporte un bord d'attaque, de manière à former une cavité annulaire 220. L'entrée d'air 200 possède un profil aérodynamique qui permet de séparer un flux d'air amont F en le flux d'air intérieur F-INT guidé par la paroi intérieure 201 et un flux d'air extérieur F-EXT guidé par la paroi extérieure 202. Par la suite, les termes « intérieur » et « extérieur » sont définis radialement par rapport à l'axe X du turboréacteur 100.

Pour réduire la distance de freinage d'un aéronef, notamment lors de l'atterrissage, il est connu d'intégrer dans une nacelle un système d'inversion de poussée qui permet de modifier l'orientation du flux d'air à l'échappement de manière à permettre une phase d'inversion de poussée. De manière connue, une poussée inverse est obtenue par ouverture de trappes/grilles dans la veine secondaire, en aval des raidisseurs, afin de conduire les flux d'air vers l'extérieur de manière radiale ou vers l'amont.

Pour un turboréacteur à fort taux de dilution, la nacelle possède un diamètre important et il n'est pas souhaité d'intégrer un système d'inversion de poussée classique étant donné que cela pénaliserait de manière importante la masse, l'encombrement et la trainée du turboréacteur.

Pour permettre une phase d'inversion de poussée, une autre solution consiste à prévoir une soufflante à pas variable, connue sous son abréviation anglaise « Variable Pitch Fan » ou VPF de manière à permettre d'inverser le flux d'air circulant dans la veine secondaire d'un turboréacteur et ainsi créer une poussée inverse permettant la décélération de l'aéronef lors de l'atterrissage.

En référence à la figure 2, lors d'une phase d'inversion de poussée, un flux d'air inverse F-INV circule d'aval en amont dans le turboréacteur 100, c'est-à-dire, inversement au flux d'air intérieur F-INT de la figure 1. Plus précisément, le flux d'air inverse F-INV circule entre la tête des aubes de soufflante 101 et la virole extérieure 102. Le flux d'air inverse F-INV est guidé vers l'amont par la paroi intérieure 201 dans une direction sensiblement axiale par rapport à l'axe X. Ce flux d'air inverse F-INV s'oppose alors au flux d'air amont F, ce qui permet l'inversion de poussée.

En pratique, comme illustré à la figure 2, une partie du flux d'air inverse F-INV contourne le profil aérodynamique de l'entrée d'air 200 selon une direction sensiblement radiale, ce qui entraine l'apparition d'une zone de dépression locale P au voisinage de la lèvre d'entrée d'air 203. Une telle dépression locale P génère une aspiration vers l'amont, c'est-à-dire, une force qui s'oppose à la poussée inverse. Dans les faits, ce phénomène affecte la phase d'inversion de poussée de manière très importante.

L'invention vise ainsi à éliminer ce phénomène afin d'augmenter les performances du turboréacteur lors d'une phase d'inversion de poussée sans affecter les performances dudit aéronef lors d'une phase de poussée, c'est-à-dire, lorsque le flux n'est pas inversé.

On connaît dans l'art antérieur par les demandes de brevet US5014933A, US3652036A et EP3421373A1 une entrée d'air comprenant une partie amont mobile en translation pour améliorer la circulation d'air en phase de poussée, notamment lors du décollage et/ou de l'atterrissage.

On connaît également par la demande de brevet EP1992810A2 une entrée d'air de longueur et d'épaisseur flexibles pour s'adapter aux conditions d'opérabilité en phase de poussée.

Il est également connu par la demande de brevet US2014/363276A1 une entrée d'air en forme de lame formant une nacelle de faible épaisseur afin d'améliorer l'admission d'air en phase de poussée. Une telle entrée d'air ne favorise pas la phase d'inversion de poussée.

Dans le domaine éloigné des aéroglisseurs, on connaît par la demande de brevet GB1565212A une hélice montée dans un carénage dont la forme de l'extrémité amont est modifiable grâce à un organe gonflable.

### PRESENTATION DE L'INVENTION

L'invention concerne un procédé d'utilisation d'une entrée d'air d'une nacelle de turboréacteur d'aéronef s'étendant selon un axe X orienté de l'amont vers l'aval dans lequel circule un flux d'air intérieur de l'amont vers l'aval lors d'une phase de poussée et un flux d'air inverse de l'aval vers l'amont lors d'une phase d'inversion de poussée, l'entrée d'air s'étendant de manière circonférentielle autour de l'axe X et comprenant une paroi intérieure tournée vers l'axe X et configurée pour guider le flux d'air intérieur et le flux d'air inverse et une paroi extérieure, opposée à la paroi intérieure et configurée pour guider un flux d'air extérieur, la paroi intérieure et la paroi extérieure étant reliées par une lèvre d'entrée d'air de manière à former une cavité annulaire, la lèvre d'entrée d'air comportant au moins une portion fixe et au moins une portion mobile entre une première position et une deuxième position.

Lorsqu'au moins une portion mobile de la lèvre d'entrée d'air est dans la première position, dans laquelle la lèvre d'entrée d'air possède un profil aérodynamique de manière à guider le flux d'air intérieur sur la paroi intérieure pour favoriser une phase de poussée et dans laquelle la lèvre d'entrée d'air possède une première épaisseur radiale, le procédé comprend, lors d'une phase d'inversion de poussée dudit turboréacteur, une étape de déplacement en translation vers l'aval de la portion mobile par rapport à la portion fixe dans la deuxième position afin que la lèvre d'entrée d'air possède une deuxième épaisseur radiale qui est inférieure à la première épaisseur radiale de manière à favoriser la poussée inverse.

Grâce à l'invention, la lèvre d'entrée d'air est modifiée entre une phase de poussée et une phase d'inversion de poussée. De manière avantageuse, lors d'une phase d'inversion de poussée, l'épaisseur radiale de la lèvre est réduite et permet de former une discontinuité/irrégularité dans le flux d'air, ce qui permet d'empêcher le flux d'air inverse d'épouser la forme de la lèvre d'entrée d'air et de générer une dépression locale ainsi qu'une force s'opposant à la poussée inverse, comme dans l'art antérieur. Autrement dit, le flux d'air inverse est avantageusement décollé de la lèvre d'entrée d'air lors d'une inversion de poussée.

De manière préférée, la portion mobile est rigide. Une portion rigide s'oppose à une enveloppe élastique.

Selon un aspect de l'invention, la lèvre d'entrée d'air comprend une pluralité de portions mobiles réparties à la circonférence de l'entrée d'air autour de l'axe X, afin de réduire la traînée.

Selon un aspect de l'invention, la lèvre d'entrée d'air comprend une unique portion mobile s'étendant de manière circonférentielle autour de l'axe X, assurant un décollement du flux d'air inverse homogène sur l'ensemble de la circonférence de la lèvre d'air.

Selon un aspect, qui n'est pas couvert par les revendications, la lèvre d'entrée d'air comportant une portion radialement intérieure et une portion radialement extérieure dans un même plan longitudinal, au moins une desdites portions est mobile en rotation entre la première position et la deuxième position. De préférence, la portion radialement intérieure et la portion radialement extérieure sont mobiles.

Selon un aspect, qui n'est pas couvert par les revendications, au moins une portion mobile est articulée en rotation entre la première position et la deuxième position.

Selon un aspect, qui n'est pas couvert par les revendications, la lèvre d'entrée d'air comportant une première portion radialement intérieure et une deuxième portion radialement extérieure, une desdites portions est articulée en rotation entre la première position et la deuxième position. Ainsi, seule une partie de la lèvre d'entrée d'air est déplacée pour former une discontinuité.

De préférence, la première portion radialement intérieure et la deuxième portion radialement extérieure sont positionnées dans un même plan transversal à l'axe X, en particulier, à la même position angulaire.

Selon un aspect, qui n'est pas couvert par les revendications, la lèvre d'entrée d'air comportant une portion radialement intérieure et une portion radialement extérieure, les deux portions sont articulées en rotation entre la première position et la deuxième position.

De préférence, la déviation peut être homogène (déviation uniforme à la circonférence) ou hétérogène (degré de déviation différent à la circonférence). A titre d'exemple de déviation hétérogène, les portions mobiles peuvent être déployées selon des degrés différents à la circonférence.

De manière préférée, la portion radialement intérieure et la portion radialement extérieure sont séparées par une ligne d'interface rectiligne, de préférence, alignée avec l'axe X de manière à former une discontinuité franche pour la circulation du flux d'air inverse.

Selon un aspect, qui n'est pas couvert par les revendications, la lèvre d'entrée d'air comportant une portion amont mobile articulée en rotation entre la première position et la deuxième position.

Selon un aspect de l'invention, au moins une portion mobile est montée en translation entre la première position et la deuxième position, de préférence, selon l'axe X.

Selon un aspect de l'invention, la lèvre d'entrée d'air comportant une portion radialement intérieure et une portion radialement extérieure, une desdites portions est montée en translation entre la première position et la deuxième position. Ainsi, seule une partie de la lèvre d'entrée d'air est déplacée pour former une discontinuité.

De manière préférée, la portion radialement intérieure et la portion radialement extérieure sont séparées par une ligne d'interface rectiligne, de préférence, alignée avec l'axe X de manière à former une discontinuité franche pour la circulation du flux d'air inverse.

Selon un aspect de l'invention, l'entrée d'air comprend au moins un organe de déplacement commandable afin de déplacer la portion mobile de la première position à la deuxième position.

Selon un aspect de l'invention, ledit turboréacteur comporte une soufflante configurée pour fournir une poussée inverse. De manière préférée, la soufflante comporte des aubes à pas variable.

L'invention concerne également une entrée d'air d'une nacelle de turboréacteur d'aéronef s'étendant selon un axe X orienté de l'amont vers l'aval dans lequel circule un flux d'air intérieur de l'amont vers l'aval lors d'une phase de poussée et un flux d'air inverse de l'aval vers l'amont lors d'une phase d'inversion de poussée, l'entrée d'air s'étendant de manière circonférentielle autour de l'axe X et comprenant une paroi intérieure tournée vers l'axe X et configurée pour guider le flux d'air intérieur et le flux d'air inverse et une paroi extérieure, opposée à la paroi intérieure et configurée pour guider un flux d'air extérieur, la paroi intérieure et la paroi extérieure étant reliées par une lèvre d'entrée d'air de manière à former une cavité annulaire, la lèvre d'entrée d'air comportant au moins une portion fixe et au moins une portion mobile entre :
- une première position, dans laquelle la lèvre d'entrée d'air possède un profil aérodynamique de manière à guider le flux d'air intérieur sur la paroi intérieure pour favoriser la poussée, la lèvre d'entrée d'air possédant une première épaisseur radiale, et
- une deuxième position dans laquelle la portion mobile est déplacée en translation vers l'aval dans la deuxième position par rapport à la portion fixe afin que la lèvre d'entrée d'air possède une deuxième épaisseur radiale qui est inférieure à la première épaisseur radiale de manière à favoriser la poussée inverse.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en coupe longitudinale d'une nacelle de turboréacteur lors d'une phase de poussée, selon l'art antérieur,
La figure 2 est une représentation schématique en coupe longitudinale d'une nacelle de turboréacteur lors d'une phase d'inversion de poussée, selon l'art antérieur,
La figure 3 est une représentation schématique en coupe longitudinale d'une nacelle de turboréacteur lors d'une phase de poussée, selon l'invention,
La figure 4 est une représentation schématique en coupe longitudinale d'une nacelle de turboréacteur lors d'une phase d'inversion de poussée, selon l'invention,
La figure 5 est une représentation schématique en coupe transversale d'une entrée d'air comprenant une rangée de portions mobiles,
La figure 6 est une représentation schématique en coupe transversale d'une entrée d'air comprenant une unique portion mobile circonférentielle,
La figure 7A et
La figure 7B sont des représentations schématiques en coupe longitudinale d'une entrée d'air comprenant une portion mobile supérieure montée en translation, selon une première position et une deuxième position,
La figure 8A et
La figure 8B sont des représentations schématiques en coupe longitudinale d'une entrée d'air comprenant une portion mobile intérieure montée en translation, selon une première position et une deuxième position,
La figure 9A et
La figure 9B sont des représentations schématiques en coupe longitudinale d'une entrée d'air comprenant une portion mobile extérieure montée en rotation (selon une forme de réalisation qui n'est pas couverte par les revendications) vers l'extérieur, selon une première position et une deuxième position,
La figure 9C est une représentation schématique en coupe longitudinale d'une entrée d'air comprenant une portion mobile intérieure montée en rotation (selon une forme de réalisation qui n'est pas couverte par les revendications) vers l'intérieur selon une deuxième position,
La figure 10A et
La figure 10B sont des représentations schématiques en coupe longitudinale d'une entrée d'air comprenant une portion mobile amont montée en rotation (selon une forme de réalisation qui n'est pas couverte par les revendications) vers l'extérieur, selon une première position et une deuxième position,
La figure 10C est une représentation schématique en coupe longitudinale d'une entrée d'air comprenant une portion mobile amont montée en rotation (selon une forme de réalisation qui n'est pas couverte par les revendications) vers l'intérieur selon une deuxième position,
La figure 11A et
La figure 11B sont des représentations schématiques en coupe longitudinale d'une entrée d'air comprenant une portion mobile montée en rotation (selon une forme de réalisation qui n'est pas couverte par les revendications) extérieure interne, selon une première position et une deuxième position,
La figure 11C est une représentation schématique en coupe longitudinale d'une entrée d'air comprenant une portion mobile montée en rotation (selon une forme de réalisation qui n'est pas couverte par les revendications) intérieure interne selon une deuxième position,
La figure 12A et
La figure 12B sont des représentations schématiques en coupe longitudinale d'une entrée d'air comprenant une portion mobile intermédiaire montée en translation, selon une première position et une deuxième position.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

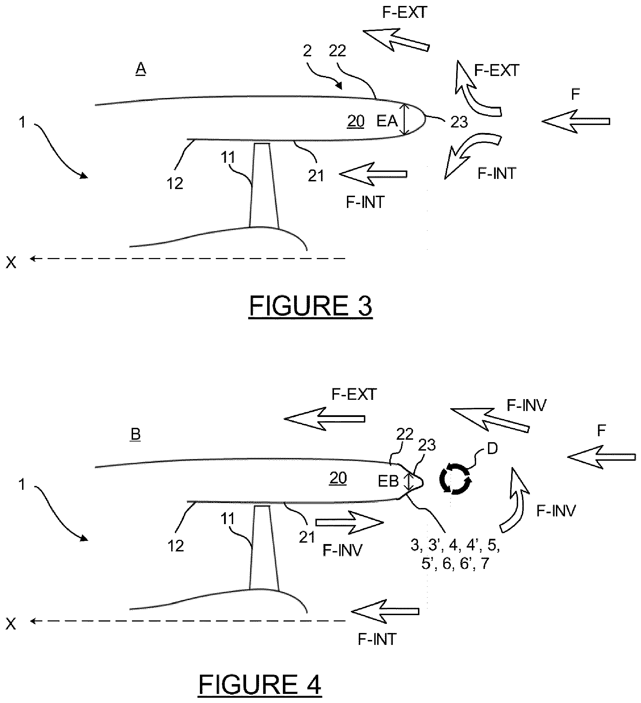

En référence aux figures 3 et 4, il est représenté un turboréacteur 1 selon l'invention s'étendant selon un axe X orienté de l'amont vers l'aval et comprenant une soufflante 11 montée rotative autour de l'axe X dans une virole extérieure 12 définissant une veine d'air. De manière connue, la soufflante 11 est configurée, lors d'une phase de poussée, pour accélérer un flux d'air circulant de l'amont vers l'aval dans le turboréacteur 1, dit flux d'air intérieur F-INT (Figure 3), et lors d'une phase d'inversion de poussée, pour accélérer un flux d'air circulant de l'aval vers l'amont dans le turboréacteur 1, dit flux d'air inverse F-INV (Figure 4). En pratique, le flux d'air inverse F-INV circule d'aval en amont dans une portion radialement extérieure de la veine d'air, en particulier, sur 1/3 du rayon de la veine d'air. Un flux d'air intérieur F-INT circule toujours d'amont en aval dans une portion radialement intérieure de la veine d'air, en particulier, sur 2/3 du rayon de la veine d'air. Le flux d'air intérieur F-INT assure un débit suffisant pour éviter tout phénomène de pompage du turboréacteur.

Comme illustré sur la figure 3, le turboréacteur 1 comprend une nacelle qui comprend à son extrémité amont une entrée d'air 2 s'étendant de manière circonférentielle autour de l'axe X et comprenant une paroi intérieure 21, tournée vers l'axe X et configurée pour guider le flux d'air intérieur F-INT et le flux d'air inverse F-INV, et une paroi extérieure 22, opposée à la paroi intérieure 21 et configurée pour guider un flux d'air extérieur F-EXT. Les parois 21, 22 sont reliées par une lèvre d'entrée d'air 23, formant une cavité annulaire 20.

Dans cet exemple, le turboréacteur 1 comporte des moyens d'inversion de poussée, en particulier, une soufflante 11 à pas variable, connue sous son abréviation anglaise « Variable Pitch Fan » ou VPF de manière à permettre d'inverser le flux d'air sur une portion radialement extérieure de la veine d'air et ainsi créer une poussée inverse permettant la décélération de l'aéronef lors de l'atterrissage.

Selon l'invention, en référence aux figures 3 et 4, la lèvre d'entrée d'air 23 comporte au moins une portion fixe et au moins une portion 3, 3', 4, 4', 5, 5', 6, 6', 7 montée mobile entre :
- une première position A (Figure 3), dans laquelle la lèvre d'entrée d'air 23 possède un profil aérodynamique de manière à guider le flux d'air intérieur F-INT sur la paroi intérieure 21 pour favoriser la poussée, la lèvre d'entrée d'air 23 possédant une première épaisseur radiale EA dans la première position A, et
- une deuxième position B (Figure 4), dans laquelle la portion 3, 3', 4, 4', 5, 5', 6, 6', 7 est déplacée par rapport à la portion fixe de manière à ce que la lèvre d'entrée d'air 23 possède une deuxième épaisseur radiale EB dans la deuxième position B qui est inférieure à la première épaisseur radiale EA.

Les épaisseurs radiales EA, EB sont mesurées dans un même plan transversal à l'axe X, en particulier, à la même position angulaire.

De manière avantageuse, dans la première position A, la portion mobile 3, 3', 4, 4', 5, 5', 6, 6', 7 n'affecte pas les performances aérodynamiques de la lèvre d'entrée d'air 23. La poussée est ainsi optimale.

Suite à son déplacement, dans la deuxième position B, l'épaisseur radiale de la lèvre d'entrée d'air est réduite et ne possède plus un profil aérodynamique, ce qui permet d'améliorer le décollement D du flux d'air inverse F-INV. Autrement dit, l'ensemble du flux d'air inverse F-INV est guidé de manière à circuler suivant une direction sensiblement axiale par rapport à l'axe X afin de s'opposer à un flux d'air amont F, à l'origine de la poussée inverse. Il n'existe plus de forte dépression locale P comme dans l'art antérieur qui vient réduire les performances de la poussée inverse. Une lèvre d'entrée d'air 23 plus fine permet de favoriser un décollement contrairement à une lèvre d'entrée d'air 23 épaisse et ayant un profil aérodynamique.

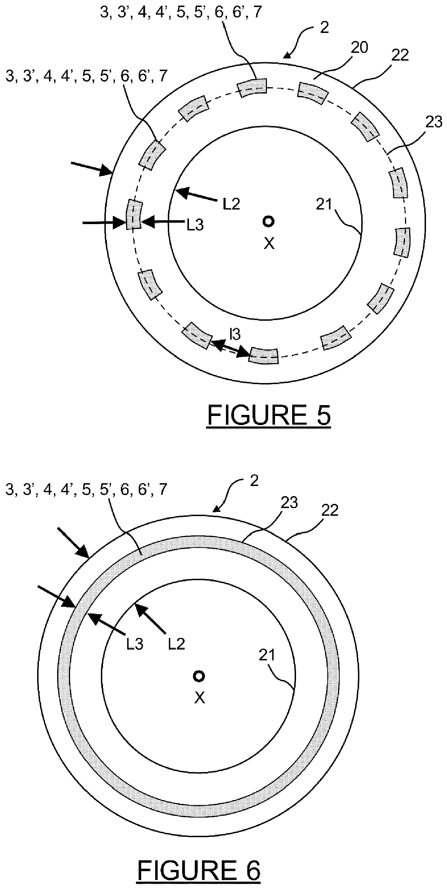

En référence à la figure 5, il est représenté une lèvre d'entrée d'air 23 comprenant plusieurs portions mobiles 3, 3', 4, 4', 5, 5', 6, 6', 7 qui sont réparties à la circonférence de l'entrée d'air 2 autour de l'axe X de manière à permettre d'améliorer la phase d'inversion de poussée de manière homogène à la circonférence de l'entrée d'air 2. De manière préférée, en référence à la figure 5, la longueur azimutale d'une portion mobile 3, 3', 4, 4', 5, 5', 6, 6', 7 est telle que sa surface soit peu encombrante, légère et facilement déployable.

De manière préférée, l'écartement azimutal I3 entre deux portions mobiles 3, 3', 4, 4', 5, 5', 6, 6', 7 consécutives est suffisamment faible de sorte que les portions mobiles 3, 3', 4, 4', 5, 5', 6, 6', 7 couvrent un maximum de surface azimutale lorsqu'elles sont déployées sans chevauchement. De manière préférée, le nombre de portions mobiles 3, 3', 4, 4', 5, 5', 6, 6', 7 est suffisamment grand pour permettre un décollement D sur l'ensemble de la circonférence de l'entrée d'air 2 et suffisamment faible pour réduire le poids et la traînée.

Lors d'un déploiement des portions mobiles 3, 3', 4, 4', 5, 5', 6, 6', 7 vers l'intérieur, la forme et le nombre de portions mobiles sont adaptés pour permettre un déploiement circonférentiel, homogène ou hétérogène, sans chevauchement. Un déploiement des portions mobiles 3, 3', 4, 4', 5, 5', 6, 6', 7 vers l'extérieur est moins contraignant.

De manière préférée, les portions mobiles 3, 3', 4, 4', 5, 5', 6, 6', 7 sont organisées en rangées, chaque rangée comportant une pluralité de portions mobiles 3, 3', 4, 4', 5, 5', 6, 6', 7 positionnées à une même distance radiale par rapport à l'axe X. A titre d'exemple, il est représenté une unique rangée sur la figure 5 mais il va de soi que le nombre de rangées pourrait être plus élevé. L'utilisation de plusieurs rangées, en particulier en quinconce, permet de réaliser une déviation sensiblement continue selon la circonférence de l'entrée d'air 2 tout en utilisant des portions mobiles 3, 3', 4, 4', 5, 5', 6, 6', 7 écartées les unes des autres qui sont plus simples à maintenir.

De manière préférée, en référence à la figure 5, dans la première position A, le rapport L3/L2, dans lequel le paramètre L3 est l'épaisseur radiale d'une portion mobile 3, 3', 4, 4', 5, 5', 6, 6', 7 et le paramètre L2 est l'épaisseur radiale de l'entrée d'air 2, est compris entre 5 et 1.

De manière alternative, en référence à la figure 6, l'entrée d'air 2 comprend une unique portion mobile 3, 3', 4, 4', 5, 5', 6, 6', 7 s'étendant de manière circonférentielle autour de l'axe X. Une telle portion mobile 3, 3', 4, 4', 5, 5', 6, 6', 7 permet d'assurer une déviation régulière lors de l'inversion de poussée à la circonférence de l'entrée d'air 2. Il va de soi que la déviation pourrait également être hétérogène à la circonférence afin d'orienter le flux d'air inverse F-INV.

L'invention sera mieux comprise lors de la description des différentes formes de réalisation. Les différents aspects de l'invention sont décrits par la suite selon plusieurs formes de réalisation, présentées successivement et uniquement à titre d'exemple.

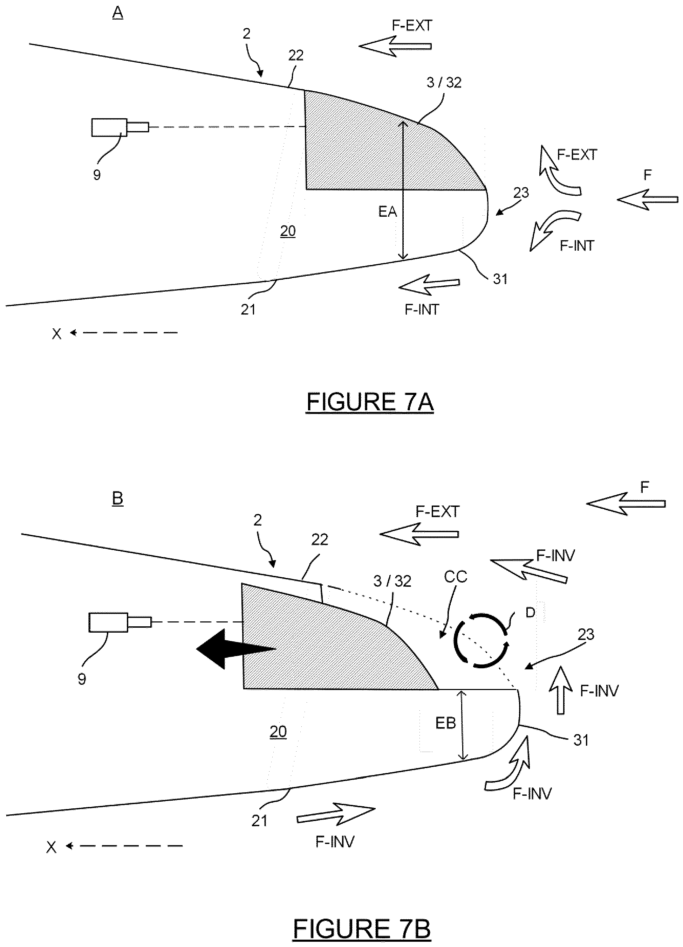

Selon une première forme de réalisation illustrée sur les figures 7A et 7B, il est représenté une portion mobile 3 qui est déplacée en translation, en particulier, selon une direction parallèle à l'axe X. Néanmoins, il va de soi que l'axe de translation pourrait être incliné par rapport à l'axe X.

Comme illustré aux figures 7A et 7B, la lèvre d'entrée d'air 23 comporte une portion radialement intérieure 31 et une portion radialement extérieure 32. Dans cet exemple, la portion radialement intérieure 31 est fixe tandis que la portion radialement extérieure 32 est mobile et forme la portion mobile 3. Dans cette forme de réalisation, la portion mobile 3 représente 50% de l'épaisseur radiale EA de la lèvre d'entrée d'air 23. De manière préférée, la portion mobile 3 représente entre 5% et 70% de l'épaisseur radiale EA de la lèvre d'entrée d'air 23. La portion mobile 3 doit être suffisamment massive pour permettre de supporter les efforts lors du fonctionnement.

La portion radialement intérieure 31 et la portion radialement extérieure 32 sont séparées par une ligne d'interface rectiligne, de préférence, alignée avec l'axe X de manière à former une discontinuité franche pour la circulation du flux d'air inverse F-INV.

Dans cet exemple, l'entrée d'air 2 comporte un organe de déplacement commandable 9 afin de déplacer en translation la portion mobile 3 de la première position A à la deuxième position B. A titre d'exemple, cet organe de déplacement commandable 9 se présente sous la forme d'un actionneur hydraulique, électrique ou autre afin de permettre un déplacement suite à la réception d'une instruction de commande d'un calculateur. De manière préférée, l'organe de déplacement commandable 9 permet également de déplacer en translation la portion mobile 3 de la deuxième position B à la première position A. L'entrée d'air 2 peut comporter un ou plusieurs organes de déplacement commandable 9.

Toujours en référence aux figures 7A et 7B, l'organe de déplacement commandable 9 permet de déplacer la portion mobile extérieure 3, 32 vers l'aval afin de réduire l'épaisseur radiale de la lèvre d'entrée d'air 23. Dans la deuxième position B (figure 7B), l'épaisseur radiale EB de la lèvre d'entrée d'air 23 est diminuée de moitié par comparaison à l'épaisseur radiale EA dans la première position A (figure 7A). Dans la deuxième position B, une cavité CC est formée en lieu et place de la portion mobile 3 dans sa première position A.

Comme illustré à la figure 7B, une lèvre d'entrée d'air 23 plus fine entraine un décollement D du flux d'air inverse F-INV lors de sa circulation de la paroi intérieure 21 à la paroi extérieure 22. Du fait de son décollement D, le flux d'air inverse F-INV n'épouse pas la forme de la lèvre d'entrée d'air 23 et est écarté de ce dernier, ce qui permet d'éviter toute formation d'une forte dépression locale comme dans l'art antérieur. Autrement dit, les performances lors de la phase d'inversion de poussée sont accrues.

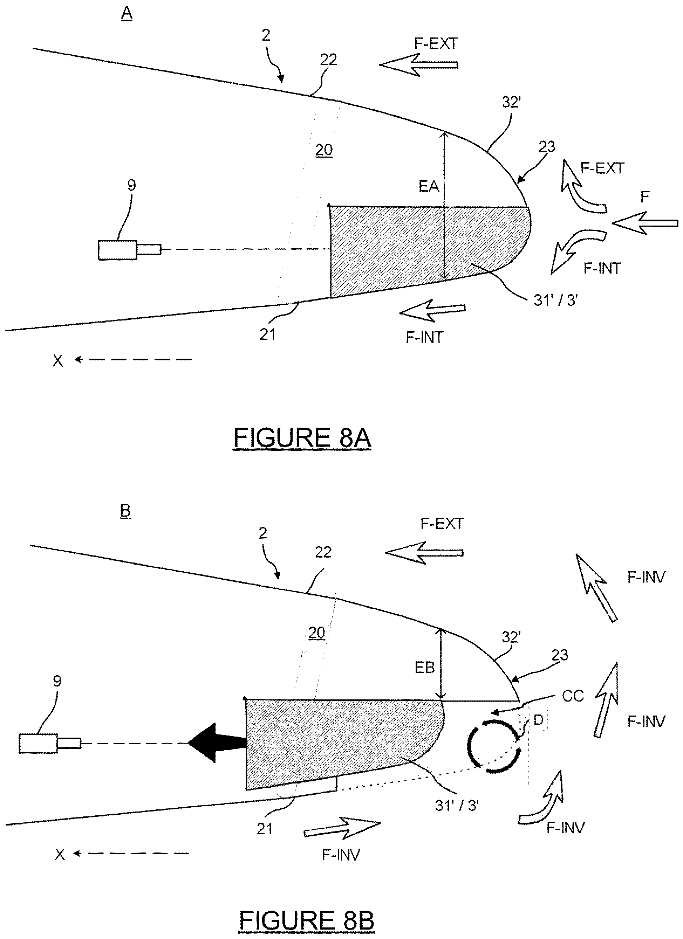

En référence aux figures 8A et 8B, il est représenté une autre variante de la première forme de réalisation. Par souci de clarté, des références numériques analogues sont utilisées afin de désigner des éléments de fonctions ou structures identiques ou analogues.

En référence aux figures 8A et 8B, la portion radialement extérieure 32' est fixe tandis que la portion radialement intérieure 31' est mobile et forme la portion mobile 3'. Comme illustré à la figure 8B, la lèvre d'entrée d'air 23 plus fine entraine un décollement D du flux d'air inverse F-INV lors de sa circulation de la paroi intérieure 21 à la paroi extérieure 22. Du fait de son décollement D, le flux d'air inverse F-INV n'épouse pas la forme de la lèvre d'entrée d'air 23 et est écarté de ce dernier, ce qui permet d'éviter la formation d'une forte dépression locale comme dans l'art antérieur.

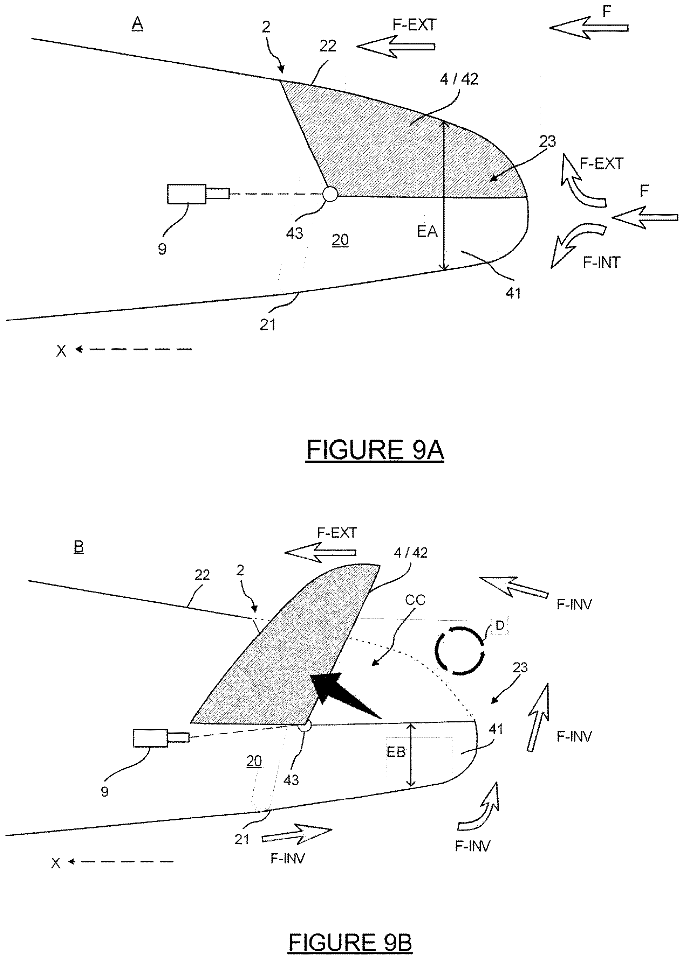

Selon une deuxième forme de réalisation, qui n'est pas couverte par les revendications, en référence aux figures 9A et 9B, il est représenté une portion mobile 4 qui est déplacée en rotation autour d'un axe azimutal, orthogonal à l'axe X de manière à permettre à la portion mobile 4 de se déplacer radialement vers l'extérieur.

Comme illustré aux figures 9A et 9B, la lèvre d'entrée d'air 23 comporte une portion radialement intérieure 41 et une portion radialement extérieure 42. Dans cet exemple, la portion radialement intérieure 41 est fixe tandis que la portion radialement extérieure 42 est mobile et forme la portion mobile 4. La portion mobile 4 est articulée à la portion fixe 41 par une articulation 43, d'axe azimutal, qui est placée en aval de l'extrémité amont de la lèvre d'entrée d'air 23 dans la cavité annulaire 20, c'est-à-dire, entre les deux parois 21, 22. Dans cette forme de réalisation, la portion mobile 4 représente 50% de l'épaisseur radiale de la lèvre d'entrée d'air 23. De manière préférée, la portion mobile 4 représente entre 5% et 70% de l'épaisseur radiale EA de la lèvre d'entrée d'air 23. La portion radialement intérieure 41 et la portion radialement extérieure 42 sont séparées par une ligne d'interface rectiligne, de préférence, alignée avec l'axe X de manière à former une discontinuité franche pour la circulation du flux d'air inverse F-INV

De manière analogue à précédemment, l'entrée d'air 2 comporte un organe de déplacement commandable 9 afin de déplacer en rotation la portion mobile 4 de la première position A à la deuxième position B. De manière préférée, l'organe de déplacement commandable 9 permet également de déplacer la portion mobile 4 de la deuxième position B à la première position A. L'entrée d'air 2 peut comporter un ou plusieurs organes de déplacement commandable 9.

Toujours en référence aux figures 9A et 9B, l'organe de déplacement commandable 9 permet de déplacer la portion mobile extérieure 4, 42 vers l'aval radialement vers l'extérieur afin de réduire l'épaisseur radiale de la lèvre d'entrée d'air 23. Dans la deuxième position B, l'épaisseur radiale EB de la lèvre d'entrée d'air 23 est diminuée de moitié par comparaison à l'épaisseur radiale EA dans la première position A. Dans la deuxième position B, une cavité CC est formée en lieu et place de la portion mobile 4 dans sa première position A.

Comme illustré à la figure 9B, une lèvre d'entrée d'air 23 plus fine entraine un décollement D du flux d'air inverse F-INV lors de sa circulation de la paroi intérieure 21 à la paroi extérieure 22. Du fait de son décollement D, le flux d'air inverse F-INV n'épouse pas la forme de la lèvre d'entrée d'air 23 et est écarté de ce dernier, ce qui permet d'éviter la formation d'une forte dépression locale comme dans l'art antérieur. Autrement dit, les performances lors de l'inversion de poussée sont accrues.

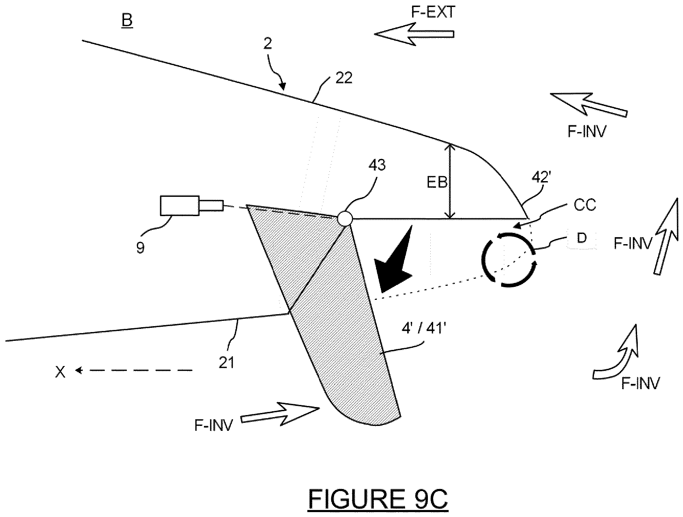

En référence à la figure 9C, il est représenté une autre variante de la deuxième forme de réalisation. Par souci de clarté, des références numériques analogues sont utilisées afin de désigner des éléments de fonctions ou structures identiques ou analogues.

De manière alternative, en référence à la figure 9C, la portion radialement extérieure 42' est fixe tandis que la portion radialement intérieure 41' est mobile et forme la portion mobile 4'. L'organe de déplacement commandable 9 permet de déplacer la portion mobile intérieure 4', 41' vers l'aval radialement vers intérieur afin de réduire l'épaisseur radiale. De manière avantageuse, dans la deuxième position B, la portion mobile 4' est déployée dans le flux d'air inverse F-INV accéléré par la soufflante 11, ce qui permet d'éviter la formation d'une forte dépression locale.

Comme illustré à la figure 9C, la lèvre d'entrée d'air 23 plus fine entraine un décollement D du flux d'air inverse F-INV lors de sa circulation de la paroi intérieure 21 à la paroi extérieure 22. Du fait de son décollement D, le flux d'air inverse F-INV n'épouse pas la forme de la lèvre d'entrée d'air 23 et est écarté de ce dernier, ce qui permet d'éviter la formation d'une forte dépression locale comme dans l'art antérieur.

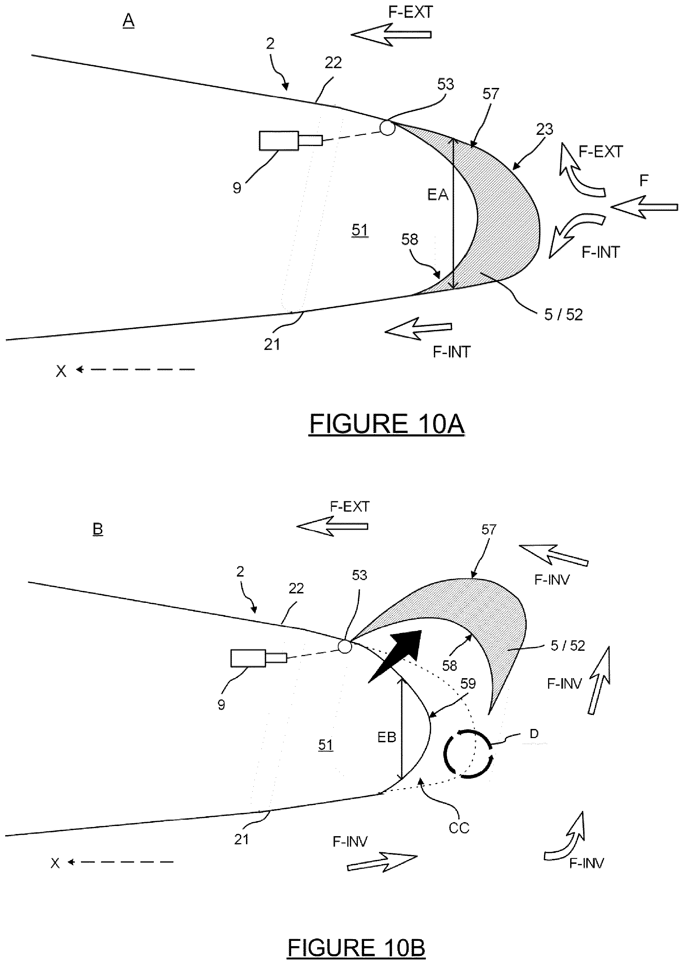

Selon une troisième forme de réalisation, qui n'est pas couverte par les revendications, en référence aux figures 10A et 10B, il est représenté une portion mobile amont 5 qui est déplacée en rotation autour d'un axe azimutal, orthogonal à l'axe X de manière à permettre à la portion mobile amont 5 de se déplacer radialement vers l'extérieur.

Comme illustré aux figures 10A et 10B, la lèvre d'entrée d'air 23 comporte une portion aval fixe 51 et une portion mobile amont 52 qui forme la portion mobile 5. La portion mobile 5 est articulée à la portion aval fixe 51 par une articulation 53 d'axe azimutal qui est placée en aval de l'extrémité amont de la lèvre d'entrée d'air 23 au niveau de la paroi extérieure 22 comme illustré à la figure 10A. Dans cette forme de réalisation, la portion mobile 5 comporte une surface convexe amont 57 formant une partie de la lèvre d'entrée d'air 23 et une surface concave aval 58. La surface concave aval 58 coopère par complémentarité de formes avec la portion aval fixe 51 qui possède une surface convexe amont 59 comme illustré à la figure 10B. Dans la deuxième position B, une cavité CC est formée en lieu et place de la portion mobile 5 dans sa première position A.

De manière analogue à précédemment, l'entrée d'air 2 comporte un organe de déplacement commandable 9 afin de déplacer en rotation la portion mobile 5 de la première position A à la deuxième position B. De manière préférée, l'organe de déplacement commandable 9 permet également de déplacer la portion mobile 5 de la deuxième position B à la première position A. L'entrée d'air 2 peut comporter un ou plusieurs organes de déplacement commandable 9.

Toujours en référence aux figures 10A et 10B, l'organe de déplacement commandable 9 permet de déplacer la portion mobile amont 5 vers l'aval radialement vers l'extérieur afin de réduire l'épaisseur radiale. Dans la deuxième position B, l'épaisseur radiale EB de la lèvre d'entrée d'air 23 correspond à l'épaisseur radiale de la portion fixe aval 51.

Comme illustré à la figure 10B, une lèvre d'entrée d'air 23 plus fine entraine un décollement D du flux d'air inverse F-INV lors de sa circulation de la paroi intérieure 21 à la paroi extérieure 22. Du fait de son décollement D, le flux d'air inverse F-INV n'épouse pas la forme de la lèvre d'entrée d'air 23 et est écarté de ce dernier, ce qui permet d'éviter la formation d'une forte dépression locale comme dans l'art antérieur. Autrement dit, les performances lors de l'inversion de poussée sont accrues. En pratique, le flux d'air inverse F-INV entre en contact avec la surface convexe amont 59 de la partie fixe 51 et la portion mobile 5 dont le profil global n'est pas aérodynamique et entraine un décollement D.

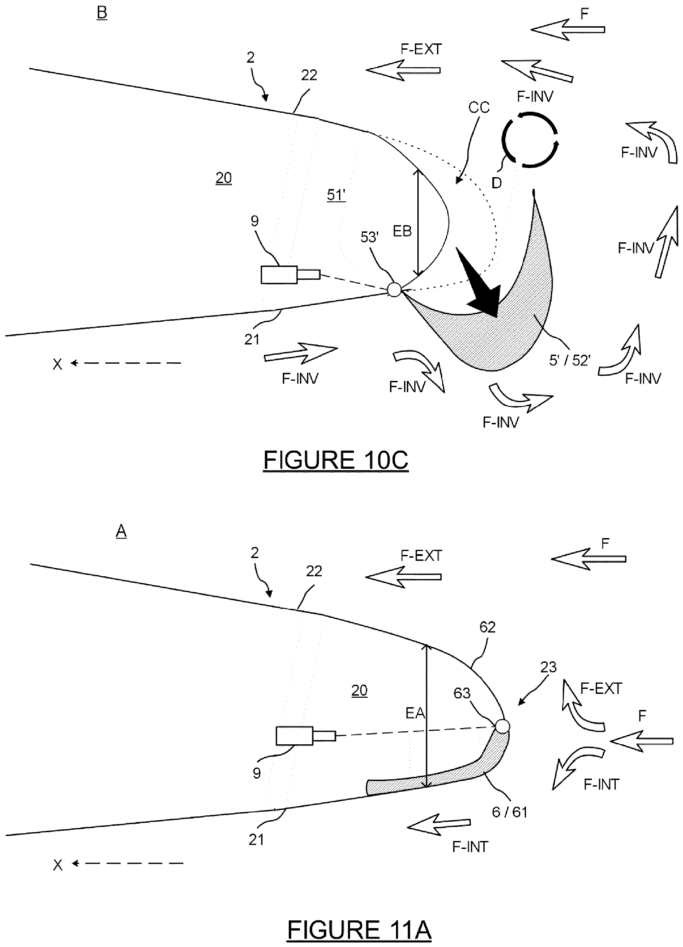

En référence à la figure 10C, il est représenté une autre variante de la troisième forme de réalisation. Par souci de clarté, des références numériques analogues sont utilisées afin de désigner des éléments de fonctions ou structures identiques ou analogues.

De manière alternative, en référence à la figure 10C, la portion mobile 5' est articulée à la portion aval fixe 51' par une articulation 53' d'axe azimutal qui est placée en aval de l'extrémité amont de la lèvre d'entrée d'air 23 au niveau de la paroi intérieure 21. L'organe de déplacement commandable 9 permet de déplacer la portion mobile amont 52' vers l'aval radialement vers l'intérieur afin de réduire l'épaisseur radiale. La portion mobile 5', située dans la circulation du flux d'air inverse F-INV favorise le décollement D. De préférence, les portions mobiles 5' sont réparties sur plusieurs rangées ou les portions mobiles 5' d'une même rangée se chevauchent.

Comme illustré à la figure 10C, la lèvre d'entrée d'air 23 plus fine entraine un décollement D du flux d'air inverse F-INV lors de sa circulation de la paroi intérieure 21 à la paroi extérieure 22. Du fait de son décollement D, le flux d'air inverse F-INV n'épouse pas la forme de la lèvre d'entrée d'air 23 et est écarté de ce dernier, ce qui permet d'éviter la formation d'une forte dépression locale comme dans l'art antérieur.

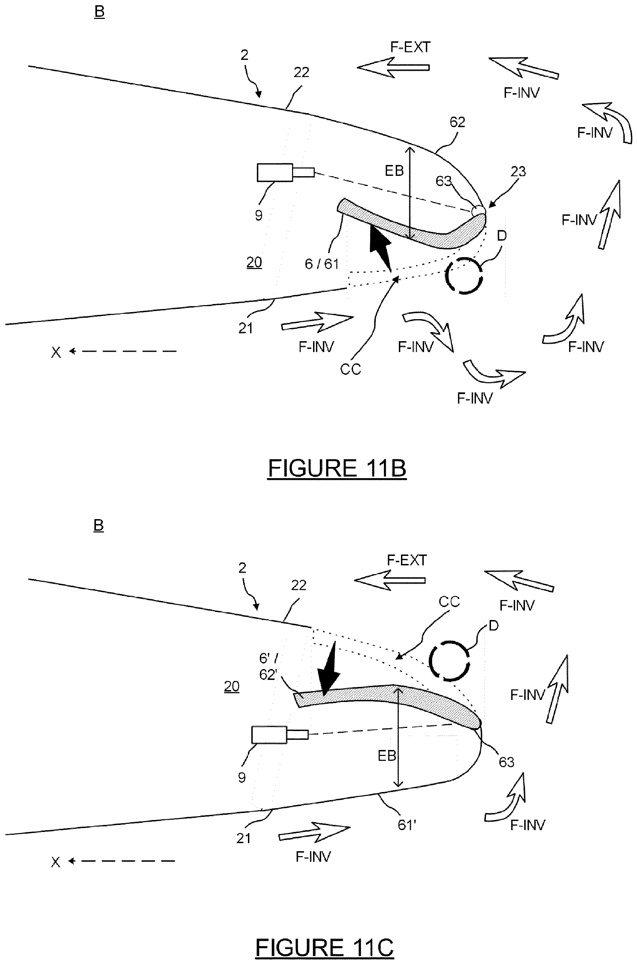

Selon une quatrième forme de réalisation, qui n'est pas couverte par les revendications, en référence aux figures 11A et 11B, il est représenté une portion mobile intérieure 6, s'étendant dans le prolongement de la paroi intérieure 21, qui est déplacée en rotation autour d'un axe azimutal, orthogonal à l'axe X de manière à permettre à la portion mobile 6 de se déplacer radialement vers l'extérieur dans la cavité annulaire 20.

Comme illustré aux figures 11A et 11B, la lèvre d'entrée d'air 23 comporte une portion radialement extérieure fixe 62 et une portion radialement intérieure mobile 61 qui forme la portion mobile 6. La portion mobile 6 est articulée à la portion fixe 62 par une articulation 63 d'axe azimutal qui est placé à l'extrémité amont de la lèvre d'entrée d'air 23 comme illustré à la figure 11A. Dans cette forme de réalisation, la portion mobile 6 se présente sous la forme d'un volet coudé qui est déplacé à l'intérieur de la cavité annulaire 20 dans la deuxième position B, c'est à dire, selon un déplacement interne. De manière préférée, la lèvre d'entrée d'air 23 comporte une ouverture d'accès à la cavité annulaire 20 qui est protégée par un organe de couverture mobile (non représenté) configuré pour autoriser, d'une part, le passage de la portion mobile 6 dans la cavité annulaire 20 lors du déplacement de la deuxième position B et, d'autre part, pour fermer l'ouverture d'accès lorsque la portion mobile 6 est positionnée dans la cavité annulaire 20. Cela permet avantageusement d'éviter une circulation du flux d'air inverse F-INV dans la cavité annulaire 20.

De manière préférée, l'organe de couverture mobile se présente sous la forme d'une trappe comprenant une ou plusieurs parties mobiles. Il va de soi que l'organe de couverture pourrait se présenter sous diverses formes.

De manière analogue à précédemment, l'entrée d'air 2 comporte un organe de déplacement commandable 9 afin de déplacer en rotation la portion mobile 6 de la première position A à la deuxième position B. De manière préférée, l'organe de déplacement commandable 9 permet également de déplacer la portion mobile 6 de la deuxième position B à la première position A. L'entrée d'air 2 peut comporter un ou plusieurs organes de déplacement commandable 9. De manière préférée, l'organe de déplacement commandable 9 permet également d'agir sur l'organe de couverture.

Toujours en référence aux figures 11A et 11B, l'organe de déplacement commandable 9 permet de déplacer la portion mobile 6, 61 vers l'aval radialement vers l'extérieur afin de réduire l'épaisseur radiale de la lèvre d'entrée d'air 23. La portion mobile 6, 6' est escamotée dans la cavité annulaire 20. Dans la deuxième position B, l'épaisseur radiale EB de la lèvre d'entrée d'air 23 correspond à l'épaisseur radiale de la portion radialement extérieure fixe 62. Dans la deuxième position B, une cavité CC est formée en lieu et place de la portion mobile 6 dans sa première position A.

Comme illustré à la figure 11B, une lèvre d'entrée d'air 23 plus fine entraine un décollement D du flux d'air inverse F-INV lors de sa circulation de la paroi intérieure 21 à la paroi extérieure 22. Du fait de son décollement D, le flux d'air inverse F-INV n'épouse pas la forme de la lèvre d'entrée d'air 23 et est écarté de ce dernier, ce qui permet d'éviter la formation d'une forte dépression locale comme dans l'art antérieur. Autrement dit, les performances lors de l'inversion de poussée sont accrues.

En référence à la figure 11C, il est représenté une autre variante, qui n'est pas couverte par les revendications, de la quatrième forme de réalisation. Par souci de clarté, des références numériques analogues sont utilisées afin de désigner des éléments de fonctions ou structures identiques ou analogues.

De manière alternative, en référence à la figure 11C, il est représenté une portion mobile extérieure 6', 62', s'étendant dans le prolongement de la paroi extérieure 22, qui est déplacée en rotation selon un axe azimutal, orthogonal à l'axe X de manière à permettre à la portion mobile 6' de se déplacer radialement vers l'intérieur dans la cavité annulaire 20. Dans cette forme de réalisation, les portions mobiles extérieures 6' se chevauchent dans la cavité annulaire 20 pour couvrir la circonférence de l'entrée d'air 2. De manière alternative, il peut être prévu plusieurs rangées de portions mobiles 6', soit une commande successive desdites portions mobiles 6', soit des axes de rotation inclinés par rapport à plan transversal à l'axe X

Comme illustré à la figure 11C, la lèvre d'entrée d'air 23 plus fine entraine un décollement D du flux d'air inverse F-INV lors de sa circulation de la paroi intérieure 21 à la paroi extérieure 22. Du fait de son décollement D, le flux d'air inverse F-INV n'épouse pas la forme de la lèvre d'entrée d'air 23 et est écarté de ce dernier, ce qui permet d'éviter la formation d'une forte dépression locale comme dans l'art antérieur.

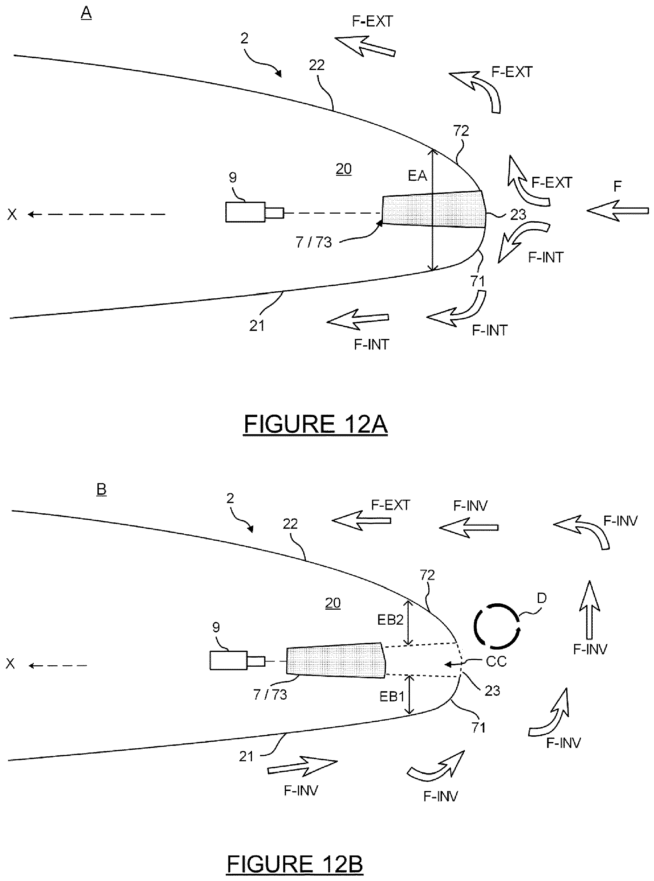

Selon une cinquième forme de réalisation, en référence aux figures 12A et 12B, il est représenté une portion intermédiaire mobile 7 qui est déplacée en translation selon une direction parallèle à l'axe X. Néanmoins, il va de soi que l'axe de translation pourrait être incliné par rapport à l'axe X.

Comme illustré aux figures 12A et 12B, la lèvre d'entrée d'air 23 comporte une portion radialement intérieure 71, une portion intermédiaire 73 et une portion radialement extérieure 72. Dans cet exemple, la portion radialement intérieure 71 et la portion radialement extérieure 73 sont fixes tandis que la portion intermédiaire 73 est mobile et forme la portion mobile 7. Dans cette forme de réalisation, la portion mobile 7 représente entre 30% et 90% de l'épaisseur radiale de la lèvre d'entrée d'air 23. De manière préférée, l'extrémité amont de la lèvre d'entrée d'air 23 appartient à la portion intermédiaire 73.

De manière analogue à précédemment, l'entrée d'air 2 comporte un organe de déplacement commandable 9 afin de déplacer en translation la portion intermédiaire 73 de la première position A à la deuxième position B. De manière préférée, l'organe de déplacement commandable 9 permet également de déplacer la portion mobile 7 de la deuxième position B à la première position A. L'entrée d'air 2 peut comporter un ou plusieurs organes de déplacement commandable 9.

Toujours en référence aux figures 12A et 12B, l'organe de déplacement commandable 9 permet de déplacer la portion intermédiaire 7, 73 vers l'aval afin de réduire l'épaisseur radiale de la lèvre d'entrée d'air 23. Dans la deuxième position B, l'épaisseur radiale EB de la lèvre d'entrée d'air 23 correspond à la somme des épaisseurs radiales EB1, EB2 de la portion radialement intérieure 71 et de la portion radialement extérieure 72. Dans la deuxième position B, une cavité CC est formée en lieu et place de la portion mobile 7 dans sa première position A, ce qui forme de manière avantageuse une discontinuité entre la portion radialement intérieure 71 et la portion radialement extérieure 72 et améliore le décollement D.

De manière préférée, la portion intermédiaire 73 s'étend de manière circonférentielle et se présente, de préférence, sous la forme d'une pièce sensiblement cylindrique.

Comme illustré à la figure 12B, une lèvre d'entrée d'air 23 plus fine avec une discontinuité intermédiaire entraine un décollement D du flux d'air inverse F-INV important lors de sa circulation de la paroi intérieure 21 à la paroi extérieure 22. Du fait de son décollement D, le flux d'air inverse F-INV n'épouse pas la forme de la lèvre d'entrée d'air 23 et est écarté de ce dernier, ce qui permet d'éviter la formation d'une forte dépression locale comme dans l'art antérieur. Autrement dit, les performances lors de l'inversion de poussée sont accrues.

On décrit par la suite un procédé d'utilisation de l'entrée d'air 2 selon l'invention précédemment présentée. Par souci de clarté, il est présenté le déplacement d'une unique portion mobile mais il va de soi qu'une pluralité de portions mobiles peut être déplacée de manière concomitante ou séquentielle.

Lors d'une phase de poussée, la soufflante 11 permet d'accélérer un flux d'air intérieur F-INT qui est guidé par l'entrée d'air 2 ayant un profil aérodynamique favorisant la poussée. La portion mobile 3, 3', 4, 4', 5, 5', 6, 6', 7 est dans la première position A lors de la poussée du turboréacteur 1, afin que l'entrée d'air 2 possède un profil aérodynamique de manière à guider le flux d'air. La lèvre d'entrée d'air 23 possède une première épaisseur radiale EA dans la première position A.

Lors d'une phase d'inversion de poussée dudit turboréacteur 1, en particulier suite à une modification du pas des aubes de soufflante 11, le procédé comprend une étape de déplacement de la portion mobile 3, 3', 4, 4', 5, 5', 6, 6', 7 de la première position A à la deuxième position B, au cours de laquelle la portion mobile est déplacée par rapport à la portion fixe dans la deuxième position B afin que la lèvre d'entrée d'air 23 possède une deuxième épaisseur radiale EB qui est inférieure à la première épaisseur radiale EA. Le décollement du flux d'air inverse F-INV est favorisé par la lèvre d'entrée d'air d'épaisseur réduite lors de la phase d'inversion de poussée.

De manière avantageuse, cette étape de déplacement procure à l'aéronef de bonnes performances à la fois lors d'une phase de poussée, où le flux d'air intérieur F-INT est conservé inchangé, et lors d'une phase d'inversion de poussée, où la portion mobile 3, 3', 4, 4', 5, 5', 6, 6', 7 génère un décollement D du flux d'air inverse F-INV de la paroi intérieure 21.

Selon un aspect de l'invention, seule une partie des portions mobiles 3, 3', 4, 4', 5, 5', 6, 6', 7 est déplacée au cours de l'étape de déplacement pour s'adapter à différentes conditions de fonctionnement (freinage, etc.) et obtenir des degrés de décollement différents à la circonférence de l'entrée d'air 2. Le flux d'air inverse est mieux contrôlé afin d'obtenir la poussée inverse souhaitée. De manière analogue, afin d'obtenir un effet équivalent, les portions mobiles peuvent être déployées selon des degrés différents.

Grâce à l'invention, les performances du turboréacteur 1 sont significativement améliorées lors de la phase d'inversion de poussée tout en maintenant les performances existantes lors de la phase de poussée. En effet, la portion mobile 3, 3', 4, 4', 5, 5', 6, 6', 7 génère, dans la deuxième position B, un décollement D du flux d'air inverse F-INV de la paroi intérieure 21 permettant d'orienter l'ensemble du flux d'air inverse F-INV dans une direction sensiblement axiale de sens opposé au flux d'air amont F, à l'origine de l'inversion de poussée, tout en générant un poids et une traînée réduits. Dans la première position A, l'entrée d'air 2 conserve avantageusement son profil aérodynamique.

## Revendications

1. Procédé d'utilisation d'une entrée d'air (2) d'une nacelle de turboréacteur (1) d'aéronef s'étendant selon un axe X orienté de l'amont vers l'aval dans lequel circule un flux d'air intérieur (F-INT) de l'amont vers l'aval lors d'une phase de poussée et un flux d'air inverse (F-INV) de l'aval vers l'amont lors d'une phase d'inversion de poussée, l'entrée d'air (2) s'étendant de manière circonférentielle autour de l'axe X et comprenant une paroi intérieure (21) tournée vers l'axe X et configurée pour guider le flux d'air intérieur (F-INT) et le flux d'air inverse (F-INV) et une paroi extérieure (22), opposée à la paroi intérieure (21) et configurée pour guider un flux d'air extérieur (F-EXT), la paroi intérieure (21) et la paroi extérieure (22) étant reliées entre elles par une lèvre d'entrée d'air (23) de manière à former une cavité annulaire (20), la lèvre d'entrée d'air (23) comportant au moins une portion fixe et au moins une portion mobile (3, 3', 7) entre une première position (A) et une deuxième position (B), procédé dans lequel, au moins une portion mobile (3, 3', 7) de la lèvre d'entrée d'air (23) étant dans la première position (A), dans laquelle la lèvre d'entrée d'air (23) possède un profil aérodynamique de manière à guider le flux d'air intérieur (F-INT) sur la paroi intérieure (21) pour favoriser une phase de poussée, la lèvre d'entrée d'air (23) possédant une première épaisseur radiale (EA), le procédé comporte, lors d'une phase d'inversion de poussée dudit turboréacteur (1), une étape de déplacement en translation vers l'aval de la portion mobile (3, 3', 7) par rapport à la portion fixe dans la deuxième position (B) afin que la lèvre d'entrée d'air (23) possède une deuxième épaisseur radiale (EB) qui est inférieure à la première épaisseur radiale (EA) de manière à favoriser la poussée inverse.

2. Procédé selon la revendication 1, dans lequel la lèvre d'entrée d'air (23) comprend une pluralité de portions mobiles (3, 3', 7) réparties à la circonférence de l'entrée d'air (2) autour de l'axe X.

3. Procédé selon la revendication 1, dans lequel la lèvre d'entrée d'air (23) comprend une unique portion mobile (3, 3', 7) s'étendant de manière circonférentielle autour de l'axe X.

4. Procédé selon l'une des revendications 1 à 3, l'entrée d'air (2) comprenant au moins un organe de déplacement commandable (9) afin de déplacer la portion mobile (3, 3', 7) de la première position (A) à la deuxième position (B).

5. Procédé selon l'une des revendications 1 à 4 dans lequel ledit turboréacteur (1) comporte une soufflante (11) configurée pour fournir une poussée inverse.

6. Turboréacteur (1) d'aéronef s'étendant selon un axe X orienté de l'amont vers l'aval dans lequel circule un flux d'air intérieur (F-INT) de l'amont vers l'aval lors d'une phase de poussée et un flux d'air inverse (F-INV) de l'aval vers l'amont lors d'une phase d'inversion de poussée, ledit turboréacteur (1) comprenant une soufflante (11) comportant des aubes à pas variable et configurée pour fournir une poussée inverse, ledit turboréacteur (1) comprenant une nacelle comprenant une entrée d'air (2) s'étendant de manière circonférentielle autour de l'axe X et comprenant une paroi intérieure (21) tournée vers l'axe X et configurée pour guider le flux d'air intérieur (F-INT) et le flux d'air inverse (F-INV) et une paroi extérieure (22), opposée à la paroi intérieure (21) et configurée pour guider un flux d'air extérieur (F-EXT), la paroi intérieure (21) et extérieure (22) étant reliées entre elles par une lèvre d'entrée d'air (23) de manière à former une cavité annulaire (20), ledit turboréacteur (1) étant **caractérisé en ce que** la lèvre d'entrée d'air (23) comporte au moins une portion fixe et au moins une portion mobile (3, 3', 7) entre :
- une première position (A), dans laquelle la lèvre d'entrée d'air (23) possède un profil aérodynamique de manière à guider le flux d'air intérieur (F-INT) sur la paroi intérieure (21) pour favoriser la poussée, la lèvre d'entrée d'air (23) possédant une première épaisseur radiale (EA), et
- une deuxième position (B) dans laquelle la portion mobile (3, 3', 7) est déplacée en translation vers l'aval dans la deuxième position (B) par rapport à la portion fixe afin que la lèvre d'entrée d'air (23) possède une deuxième épaisseur radiale (EB) qui est inférieure à la première épaisseur radiale (EA) de manière à favoriser la poussée inverse.

## Patentansprüche

1. Verfahren zur Verwendung eines Lufteintritts (2) einer Gondel eines Flugzeug-Turboreaktors (1), der sich gemäß einer Achse X erstreckt, die von stromaufwärts nach stromabwärts ausgerichtet ist, in dem ein innerer Luftstrom (F-INT) von stromaufwärts nach stromabwärts bei einer Schubphase und ein umgekehrter Luftstrom (F-INV) von stromabwärts nach stromaufwärts bei einer Schubumkehrphase zirkuliert, wobei sich der Lufteintritt (2) umfangmäßig um die Achse X erstreckt und eine Innenwand (21), die zur Achse X zeigt und dazu ausgelegt ist, den inneren Luftstrom (F-INT) und den umgekehrten Luftstrom (F-INV) zu führen, und eine Außenwand (22), die der Innenwand (21) gegenüberliegt und dazu ausgelegt ist, einen äußeren Luftstrom (F-EXT) zu führen, umfasst, wobei die Innenwand (21) und die Außenwand (22) durch eine Lufteinlasslippe (23) derart miteinander verbunden sind, dass ein ringförmiger Hohlraum (20) gebildet wird, wobei die Lufteinlasslippe (23) mindestens einen feststehenden Abschnitt und mindestens einen beweglichen Abschnitt (3, 3', 7) zwischen einer ersten Position (A) und einer zweiten Position (B) aufweist, wobei bei dem Verfahren mindestens ein beweglicher Abschnitt (3, 3', 7) der Lufteinlasslippe (23) in der ersten Position (A) ist, in welcher die Lufteinlasslippe (23) ein aerodynamisches Profil derart besitzt, dass der innere Luftstrom (F-INT) auf die Innenwand (21) geführt wird, um eine Schubphase zu begünstigen, wobei die Lufteinlasslippe (23) eine erste radiale Dicke (EA) besitzt, wobei das Verfahren bei einer Schubumkehrphase des Turboreaktors (1) einen Schritt des translatorischen Verlagerns des beweglichen Abschnitts (3, 3', 7) stromabwärts relativ zum feststehenden Abschnitt in die zweite Position (B) aufweist, damit die Lufteinlasslippe (23) eine zweite radiale Dicke (EB) besitzt, die kleiner als die erste radiale Dicke (EA) ist, um den Umkehrschub zu begünstigen.

2. Verfahren nach Anspruch 1, wobei die Lufteinlasslippe (23) eine Vielzahl beweglicher Abschnitte (3, 3', 7) umfasst, die am Umfang des Lufteintritts (2) um die Achse X verteilt sind.

3. Verfahren nach Anspruch 1, wobei die Lufteinlasslippe (23) einen einzigen beweglichen Abschnitt (3, 3', 7) umfasst, der sich umfangmäßig um die Achse X erstreckt.

4. Verfahren nach einem der Ansprüche 1 bis 3, wobei der Lufteinlass (2) mindestens ein steuerbares Verlagerungsorgan (9) umfasst, um den beweglichen Abschnitt (3, 3', 7) aus der ersten Position (A) in die zweite Position (B) zu verlagern.

5. Verfahren nach einem der Ansprüche 1 bis 4, wobei der Turboreaktor (1) ein Gebläse (11) aufweist, das dazu ausgelegt ist, einen Umkehrschub bereitzustellen.

6. Flugzeug-Turboreaktor (1), der sich gemäß einer Achse X erstreckt, die von stromaufwärts nach stromabwärts ausgerichtet ist, in dem ein innerer Luftstrom (F-INT) von stromaufwärts nach stromabwärts bei einer Schubphase und ein umgekehrter Luftstrom (F-INV) von stromabwärts nach stromaufwärts bei einer Schubumkehrphase zirkuliert, wobei der Turboreaktor (1) ein Gebläse (11) umfasst, das Schaufeln mit variabler Steigung aufweist und dazu ausgelegt ist, einen Umkehrschub bereitzustellen, wobei der Turboreaktor (1) eine Gondel umfasst, die einen Lufteintritt (2) umfasst, der sich umfangmäßig um die Achse X erstreckt und eine Innenwand (21) umfasst, die zur Achse X zeigt und dazu ausgelegt ist, den inneren Luftstrom (F-INT) und den umgekehrten Luftstrom (F-INV) zu führen und eine Außenwand (22), die der Innenwand (21) gegenüberliegt und dazu ausgelegt ist, einen äußeren Luftstrom (F-EXT) zu führen, wobei die Innenwand (21) und die Außenwand (22) durch eine Lufteinlasslippe (23) derart miteinander verbunden sind, dass ein ringförmiger Hohlraum (20) gebildet wird, wobei der Turboreaktor (1) **dadurch gekennzeichnet ist, dass** die Lufteinlasslippe (23) mindestens einen feststehenden Abschnitt und mindestens einen beweglichen Abschnitt (3, 3', 7) aufweist zwischen:
- einer ersten Position (A), in der die Lufteinlasslippe (23) ein aerodynamisches Profil derart besitzt, dass der innere Luftstrom (F-INT) auf die Innenwand (21) geführt wird, um den Schub zu begünstigen, wobei die Lufteinlasslippe (23) eine erste radiale Dicke (EA) besitzt, und
- einer zweiten Position (B), in der der bewegliche Abschnitt (3, 3', 7) in die zweite Position (B) relativ zum feststehenden Abschnitt stromabwärts translatorisch verlagert wird, damit die Lufteinlasslippe (23) eine zweite radiale Dicke (EB) besitzt, die kleiner als die erste radiale Dicke (EA) ist, um den Umkehrschub zu begünstigen.

## Claims

1. A method for operating an air intake (2) of an aircraft turbojet engine nacelle (1) extending along an axis X oriented from upstream to downstream in which an internal air flow (F-INT) circulates from upstream to downstream during a thrust phase and a reverse air flow (F-INV) from downstream to upstream during a thrust reversal phase, the air intake (2) circumferentially extending about axis X, and comprising an internal wall (21) pointing to axis X and configured to guide the internal air flow (F-INT) and the reverse air flow (F-INV), and an external wall (22), opposite to the internal wall (21) and configured to guide an external air flow (F-EXT), the internal wall (21) and the external wall (22) being connected to each other by an air intake lip (23) so as to form an annular cavity (20), the air intake lip (23) comprising at least one fixed portion and at least one movable portion (3, 3', 7) between a first position (A) and a second position (B), method wherein at least one movable portion (3, 3', 7) of the air intake lip (23) is in the first position (A), in which the air intake lip (23) has an aerodynamic profile so as to guide the internal air flow (F-INT) over the internal wall (21) to promote a thrust phase, the air intake lip (23) having a first radial thickness (EA), the method comprises, during a thrust reversal phase of said turbojet engine (1), a step of moving in downstream translation the movable portion (3, 3', 7) with respect to the fixed portion in the second position (B) so that the air intake lip (23) comprises a second radial thickness (EB) that is less than the first radial thickness (EA) so as to promote reverse thrust.

2. The method according to claim 1, wherein the air intake lip (23) comprises a plurality of movable portions (3, 3', 7) distributed at the circumference of the air intake (2) about axis X.

3. The method according to claim 1, wherein the air intake lip (23) comprises a single movable portion (3, 3', 7) circumferentially extending about axis X.

4. The method according to any of claims 1 to 3, wherein the air intake (2) comprises at least one controllable moving member (9) in order to move the movable portion (3, 3', 7) from the first position (A) to the second position (B).

5. The method according to any of claims 1 to 4, wherein said turbojet engine (1) comprises a fan (11) configured to provide reverse thrust.

6. An aircraft turbojet engine (1) extending along an axis X oriented from upstream to downstream in which an internal air flow (F-INT) circulates from upstream to downstream during a thrust phase and a reverse air flow (F-INV) from downstream to upstream during a thrust reversal phase, said turbojet engine (1) comprising a fan (11) comprising variable pitch vanes and configured to provide reverse thrust, said turbojet engine (1) comprising a nacelle comprising an air intake (2) circumferentially extending about axis X and comprising an internal wall (21) pointing to axis X and configured to guide the internal air flow (F-INT) and the reverse air flow (F-INV), and an external wall (22), opposite to the internal wall (21) and configured to guide an external air flow (F-EXT), the internal (21) and external (22) walls being connected to each other by an air intake lip (23) so as to form an annular cavity (20), said turbojet engine (1) being **characterized in that** the air intake lip (23) comprises at least one fixed portion and at least one portion (3, 3', 7) that is movable between:
- a first position (A), in which the air intake lip (23) has an aerodynamic profile so as to guide the internal air flow (F-INT) over the internal wall (21) to promote thrust, the air intake lip (23) having a first radial thickness (EA), and
- a second position (B) in which the movable portion (3, 3', 7) is moved in downstream translation into the second position (B) relative to the fixed portion so that the air intake lip (23) comprises a second radial thickness (EB) which is less than the first radial thickness (EA) so as to promote reverse thrust.
